(19) Europäisches Patentamt
European Patent Office
Office européen des brevets

(11) EP 4 635 746 A1

# (12) EUROPEAN PATENT APPLICATION

(43) Date of publication:
**22.10.2025 Bulletin 2025/43**

(21) Application number: **25169633.2**

(22) Date of filing: **10.04.2025**

(51) International Patent Classification (IPC):
***B60C 1/00*** *(2006.01)* ***C08L 7/00*** *(2006.01)*
***C08L 47/00*** *(2006.01)*

(52) Cooperative Patent Classification (CPC):
(C-Sets available)
**C08L 7/00; B60C 1/0025; C08L 47/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.04.2024 JP 2024068445**

(71) Applicant: **SUMITOMO RUBBER INDUSTRIES, LTD.**
**Kobe-shi, Hyogo 651-0072 (JP)**

(72) Inventor: **Torita, Kazuya**
**Hyogo, 651-0072 (JP)**

(74) Representative: **Forresters IP LLP**
**Skygarden**
**Erika-Mann-Straße 11**
**80636 München (DE)**

## (54) TIRE

(57) Provided is a tire that can improve in overall performance of fuel efficiency and ozone resistance. The tire is a tire comprising a sidewall, wherein the sidewall is composed of a rubber composition comprising a rubber component, wherein the rubber component comprises an isoprene-based rubber and a branched conjugated diene copolymer, wherein the branched conjugated diene copolymer comprises an ethylene unit and a structural unit derived from a 1,3-diene compound expressed by $CH_2 = CR - CH = CH_2$ (wherein, R represents a hydrocarbon group having 3 or more carbon atoms), and wherein M is 50 or more, and $M \times C_{SW} / T^3$ is greater than 70,
where M represents a content, in mol%, of the ethylene unit in the branched conjugated diene copolymer, T represents a thickness, in mm, of a surface rubber layer at a tire maximum width position, and Csw represents a content, in % by mass, of the branched conjugated diene copolymer in the rubber component.

EP 4 635 746 A1

(52) Cooperative Patent Classification (CPC): (Cont.)

C-Sets
**C08L 7/00, C08L 47/00, C08L 9/00, C08L 91/00, C08L 91/08, C08K 3/04, C08K 5/18, C08K 5/3437, C08K 3/22, C08K 5/09, C08K 3/06, C08K 5/47; C08L 47/00, C08L 7/00, C08L 9/00, C08L 91/00, C08L 91/08, C08K 3/04, C08K 5/18, C08K 5/3437, C08K 3/22, C08K 5/09, C08K 3/06, C08K 5/47**

## Description

### TECHNICAL FIELD

The present invention relates to a tire.

### BACKGROUND OF THE INVENTION

Ozone resistance, that is, prevention of crack/deterioration of a rubber due to ozone in the atmosphere has been demanded for a rubber composition for tire. Since a sidewall of a tire is exposed directly to the outside air and is a member conspicuous in mounting the tire on a car, a rubber composition for sidewall is required to be more excellent in ozone resistance than other tire members.
Moreover, a further improvement in fuel efficiency has been demanded for the tire.
JP 2014-133844 A describes that fuel efficiency and ozone resistance are improved by a rubber composition for sidewall comprising a rubber component and wax derived from sunflower seeds.

### SUMMARY OF THE INVENTION

It is an object of the present invention to provide a tire that can improve in overall performance of fuel efficiency and ozone resistance.
The present invention relates to:

a tire comprising a sidewall,
wherein the sidewall is composed of a rubber composition comprising a rubber component,
wherein the rubber component comprises an isoprene-based rubber and a branched conjugated diene copolymer,
wherein the branched conjugated diene copolymer comprises an ethylene unit and a structural unit derived from a 1,3-diene compound expressed by $CH_2 = CR - CH = CH_2$ (wherein, R represents a hydrocarbon group having 3 or more carbon atoms), and
wherein M is 50 or more, and $M \times C_{SW} / T^3$ is greater than 70,
where M represents a content, in mol%, of the ethylene unit in the branched conjugated diene copolymer, T represents a thickness, in mm, of a surface rubber layer at a tire maximum width position, and Csw represents a content, in % by mass, of the branched conjugated diene copolymer in the rubber component.

According to the present invention, provided is a tire that can improve in overall performance of fuel efficiency and ozone resistance.

### BRIEF DESCRIPTION OF THE DRAWINGS

FIG. 1 is a schematic partial cross-sectional view of a tire relating to the present embodiment.

### DETAILED DESCRIPTION

The tire that is one embodiment of the present invention is a tire comprising a sidewall, wherein the sidewall is composed of a rubber composition comprising a rubber component, wherein the rubber component comprises an isoprene-based rubber and a branched conjugated diene copolymer, wherein the branched conjugated diene copolymer comprises an ethylene unit and a structural unit derived from a 1,3-diene compound expressed by $CH_2 = CR - CH = CH_2$ (wherein, R represents a hydrocarbon group having 3 or more carbon atoms), and wherein M is 50 or more, and $M \times C_{SW} / T^3$ is greater than 70,
where M represents a content, in mol%, of the ethylene unit in the branched conjugated diene copolymer, T represents a thickness, in mm, of a surface rubber layer at a tire maximum width position, and Csw represents a content, in % by mass, of the branched conjugated diene copolymer in the rubber component.
Although it is not intended to be bound by a theory, for example, the following can be considered as a reason why the tire of the present embodiment improves in overall performance of fuel efficiency and ozone resistance.
First, (1) when the rubber composition constituting the sidewall comprises an isoprene-based rubber in the rubber component, dispersibility of a compounding agent contained in the rubber composition is improved by the isoprene-based rubber, which is considered to contribute to an improvement of fuel efficiency. Moreover, (2) when a predetermined branched conjugated diene copolymer is included in the rubber component, compatibility of the rubber component is improved, so that a crack becomes less likely to occur on a surface of the sidewall even after running for a long period of

time, which is considered to contribute to an improvement of ozone resistance.

Additionally, (3) when the content of the ethylene unit in the branched conjugated diene copolymer is 50 mol% or more, compatibility with another rubber component and co-crosslinkability with a member adjacent to the sidewall are improved, which is considered to contribute to an improvement of the overall performance.

Furthermore, in a case where the content, in mol%, of the ethylene unit in the predetermined branched conjugated diene copolymer is referred to M, the thickness, in mm, of the surface rubber layer at the tire maximum width position is referred to T, and the content, in % by mass, of the branched conjugated diene copolymer in the rubber component is referred to Csw, (4) when $M \times C_{SW} / T^3$ is greater than 70, the sidewall becomes thin relative to the content of the ethylene unit, and strain applied to the sidewall during running of a vehicle can be reduced, whereby a protective film becomes less likely to crack. As a result, an ozone crack and a split become less likely to occur.

It is considered that, with cooperation of (1) to (4), a remarkable effect of providing a tire that improves in overall performance of fuel efficiency and ozone resistance is achieved.

The 1,3-diene compound is preferably farnesene and/or myrcene from the viewpoint of practical aspects such as easy availability of a monomer and the like and for the reason that the effects of the present invention can be more appropriately obtained.

It is preferable that the rubber component further comprises a butadiene rubber.

When it comprises a butadiene rubber, compatibility between the predetermined branched conjugated diene copolymer and another rubber component is improved, and thus it is considered that ozone resistance is further improved.

$M \times C_{SW} / T^3$ is preferably greater than 300 from the viewpoint of the effects of the present invention.

T is preferably greater than 1.0 mm and less than 2.5 mm.

When the thickness T of the surface rubber layer at the tire maximum width position is within the above-described range, strain applied to the sidewall during running of a vehicle is reduced, an ozone crack and a split are less likely to occur, and thus it is considered that ozone resistance is further improved.

The rubber composition preferably comprises carbon black.

$N_2SA$ of carbon black included in the rubber composition is preferably 100 $m^2/g$ or more and 140 $m^2/g$ or less from the viewpoint of fuel efficiency.

An average primary particle size of carbon black included in the rubber composition is preferably 15 nm or more and 25 nm or less from the viewpoint of fuel efficiency.

[Definition]

A "sidewall" is a member including a part forming a side surface of a tire and is arranged on an inner side in a tire radial direction with respect to a tread part and on an outer side in the tire radial direction with respect to a bead part.

A "standardized state" is a state in which the tire is rim-assembled to a standardized rim, filled with air at a standardized internal pressure, and applied with no load.

A "standardized rim" is a rim, in a standard system including a standard on which the tire is based, defined for each tire by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of a tire that is not defined by the standard, the "standardized rim" shall refer to a rim having the narrowest rim width among rims that can be rim-assembled to the tire, that can maintain an internal pressure (that is, do not cause air leakage between the rim and the tire), and that have the smallest rim diameter.

A "standardized internal pressure" is an air pressure, in a standard system including a standard on which the tire is based, defined for each tire by the standard, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load, in kg" is a load, in a standard system including a standard on which the tire is based, defined for each tire by the standard, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in the case of tires that are not

defined by the standard, a maximum load capacity $W_L$ obtained by another calculation is defined as a standardized load.

A "maximum load capacity $W_L$, in kg" is calculated by the following equation. "V" represents a virtual volume, in $mm^3$, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire.

$$W_L = 0.000011 \times V + 175$$

$$V = \{(Dt/2)^2 - (Dt/2 - Ht)^2\} \times \pi \times Wt$$

A "thickness T, in mm, of a surface rubber layer at a tire maximum width position" is a distance, in mm, from a surface of a sidewall to a surface of a carcass cord, measured along a normal line at a tire maximum width position PW of the sidewall. A "tire maximum width position PW" refers to a position at which a tire has the maximum width on a cross section in a tire width direction, the maximum width being measured in a standardized state. The "surface rubber layer" comprises a sidewall.

A "glass transition temperature of a copolymer" is measured by measurement while raising temperature at a temperature rising rate of 10°C/min using a differential scanning calorimeter (for example, Q200 manufactured by TA Instruments Japan Inc.) according to JIS K 7121.

A "styrene content" is calculated by pyrolysis gas chromatography. Besides, in the present specification, "pyrolysis gas chromatography" refers to a method of heating a sample by a pyrolysis device, separating individual components contained in a gas-phase component generated by this heating from one another using a separation column, and analyzing each isolated component. A "vinyl content (1,2-bond butadiene unit amount)" also is calculated by pyrolysis gas chromatography similarly.

A "cis content (cis-1,4-bond butadiene unit amount)" is a value calculated by pyrolysis gas chromatography like the above-described styrene content and is applied to a rubber component having a repeating unit derived from butadiene such as, for example, an SBR, a BR, and the like.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKgel (Registered Trademark) SuperMultiporeHZ-M manufactured by Tosoh Corporation). For example, Mw is applied to a copolymer, a butadiene rubber, a plasticizing agent, and the like.

A "nitrogen adsorption specific surface area ($N_2SA$) of carbon black" is measured according to JIS K 6217-2:2017.

An "average primary particle size of carbon black" is values calculated by an arithmetic mean of particle sizes of 400 particles which are photographed with a transmission or scanning electron microscope. In a case that the particle is in a spherical shape, a diameter of the sphere is defined as a particle size, and in cases of shapes other than the spherical shape, an equivalent circle diameter (positive square root of "$4 \times$(area of particle)/$\pi$") calculated from a microscope image is defined as a particle size.

A "plasticizing agent" is a material giving a rubber component plasticity and is a component extracted from a rubber composition using acetone. Moreover, examples of the plasticizing agent include a plasticizing agent that is liquid (in a liquid state) at 25°C and a plasticizing agent that is solid at 25°C. However, the plasticizing agent shall not include wax and stearic acid commonly used in the tire industry.

[Tire]

The tire relating to the present embodiment is a tire comprising a sidewall composed of a predetermined rubber composition, wherein a rubber component in the rubber composition comprises an isoprene-based rubber and a predetermined branched conjugated diene copolymer in the rubber component, and wherein M is 50 or more and $M \times C_{SW} / T^3$ is greater than 70 when a content, in mol%, of an ethylene unit in the branched conjugated diene copolymer is referred to as M, a thickness, in mm, of a surface rubber layer at a tire maximum width position is referred to T, and a content, in % by mass, of the branched conjugated diene copolymer in the rubber component is referred to Csw.

<$M \times C_{SW}/T^3$>

In the tire relating to the present embodiment, $M \times C_{SW} / T^3$ is greater than 70, preferably greater than 100, more

preferably greater than 200, further preferably greater than 300, further preferably greater than 350, further preferably greater than 400, particularly preferably greater than 500. Moreover, $M \times C_{SW} / T^3$ is preferably less than 1500, more preferably less than 1400, further preferably less than 1300. M, Csw, and T will be described later.

The tire relating to one embodiment of the present invention will be described below with reference to the drawings. Besides, the embodiment described below is merely one example, and the tire of the present invention is not limited to the embodiment described below.

FIG. 1 illustrates a tire relating to one embodiment of the present invention. FIG. 1 shows a part of a cross section perpendicular to a circumferential direction of this tire. In FIG, 1, a vertical direction is a tire radial direction, a horizontal direction is a tire axial direction, and a direction perpendicular to a paper surface is a tire circumferential direction.

Although only parts on the right side from a tire equator CL are shown in FIG. 1, the tire has a similar continuous structure also on the left side from the CL when the CL is used as an axis of symmetry.

The tire in FIG. 1 comprises a tread part 1 extending in a circumferential direction to form a ring shape, a sidewall 31 arranged on each of both sides of the tread part, a bead part having a bead core 21, at least one layer of carcass 33 that is moored to the bead core 21, and at least one layer of belt 2 that is arranged on the outer side of the carcass 33 in a tire radial direction. Moreover, an inner liner 32 is present on the lower part of the belt 2. The tire relating to the present embodiment is a tire comprising a sidewall and preferably comprises, as other members, respective members shown in FIG. 1. Moreover, a band 3 may be present between the tread part 1 and the belt 2 or the band 3 may not be present.

A thickness T of a surface rubber layer at a tire maximum width position is preferably 1.0 mm or more, more preferably 1.3 mm or more, further preferably 1.5 mm or more, particularly preferably 1.7 mm or more, from the viewpoint of the effects of the present invention. Moreover, T is preferably 8.0 mm or less, more preferably 6.0 mm or less, further preferably 4.0 mm or less, further preferably 3.0 mm or less, particularly preferably 2.4 mm or less, from the viewpoint of the effects of the present invention.

[Rubber composition]

A rubber composition constituting a sidewall of the tire relating to the present embodiment (which is hereinafter referred to as the "rubber composition relating to the present embodiment") comprises a rubber component comprising an isoprene-based rubber and a predetermined branched conjugated diene copolymer. The rubber composition relating to the present embodiment will be described below.

<Rubber component>

The rubber composition relating to the present embodiment comprises an isoprene-based rubber and a branched conjugated diene copolymer as rubber components and preferably further comprises a butadiene rubber.

(Isoprene-based rubber)

As an isoprene-based rubber, for example, those common in the tire industry can be used, such as an isoprene rubber (IR), a natural rubber, and the like. Examples of the natural rubber include not only a non-modified natural rubber (NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of an isoprene-based rubber in the rubber component is preferably 10% by mass or more, more preferably 20% by mass or more, further preferably 30% by mass or more, further preferably 32% by mass or more, particularly preferably 35% by mass or more. Moreover, the content of the isoprene-based rubber is preferably 80% by mass or less, more preferably 60% by mass or less, further preferably 50% by mass or less, from the viewpoint that another rubber component is compounded.

(Branched conjugated diene copolymer)

The branched conjugated diene copolymer included in the rubber composition relating to the present embodiment comprises an ethylene unit and a structural unit derived from a 1,3-diene compound expressed by $CH_2 = CR - CH = CH_2$ (wherein, R represents a hydrocarbon group having 3 or more carbon atoms). For the branched conjugated diene copolymer, configuration of the respective units is not particularly limited, and the branched conjugated diene copolymer may be a random copolymer obtained by random copolymerization or a block copolymer obtained by block copolymerization. However, the branched conjugated diene copolymer is preferably a random copolymer.

An ethylene unit refers to a structural unit derived from ethylene in a branched diene copolymer. The ethylene unit may be one formed by performing hydrogeneration on a structural unit (butadiene unit) derived from 1,3-butadiene.

A content M of an ethylene unit in the branched conjugated diene copolymer is 50 mol% or more, preferably 55 mol% or more, more preferably 60 mol% or more, further preferably 65 mol% or more, from the viewpoint of the effects of the present invention. Moreover, the content M of an ethylene unit in the branched conjugated diene copolymer is preferably 90 mol% or less, more preferably 85 mol% or less, further preferably 80 mol% or less.

A 1,3-diene compound included in the branched conjugated diene copolymer included in the rubber composition relating to the present embodiment is a 1,3-diene compound expressed by the following formula.

$$CH_2 = CR - CH = CH_2$$

(wherein, R represents a hydrocarbon having 3 or more carbon atoms.)

R is a hydrocarbon group having 3 or more carbon atoms, preferably a hydrocarbon group having 3 or more and 50 or less carbon atoms, more preferably a hydrocarbon group having 3 or more and 40 or less carbon atoms, further preferably a hydrocarbon group having 3 or more and 30 or less carbon atoms, further preferably a hydrocarbon group having 3 or more and 20 or less carbon atoms, further preferably a hydrocarbon group having 3 or more and 15 or less carbon atoms, particularly preferably a hydrocarbon group having 5 or more and 12 or less carbon atoms.

A hydrocarbon is, but not particularly limited to, preferably an aliphatic hydrocarbon. The aliphatic hydrocarbon may be a linear aliphatic hydrocarbon or a branched aliphatic hydrocarbon. Moreover, the aliphatic hydrocarbon may be a saturated aliphatic hydrocarbon or an unsaturated aliphatic hydrocarbon.

The 1,3-diene compound is preferably one or more selected from the group consisting of isoprene, myrcene, and farnesene. Among them, myrcene and/or farnesene is more preferable. Farnesene may be $\alpha$-farnesene or $\beta$-farnesene. Besides, $\alpha$-farnesene and $\beta$-farnesene may be used in combination. The 1,3-diene compound may be used alone, or two or more thereof may be used in combination.

The structural unit derived from the 1,3-diene compound can take a 1,2 configuration expressed by the following formula (1), a 3,4 configuration expressed by the following formula (2), and a 1,4 configuration expressed by the following formula (3). The structural unit derived from the 1,3-diene compound of the branched conjugated diene copolymer included in the rubber composition relating to the present embodiment preferably comprises a 3,4 configuration expressed by the following formula (2). The 3,4 configuration is preferably 10 mol% or more, more preferably 15 mol% or more, further preferably 20 mol% or more of the entire structural unit derived from the 1,3-diene compound.

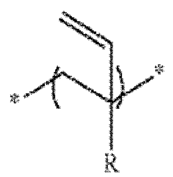
(1)

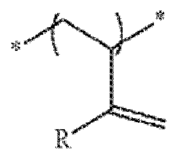
(2)

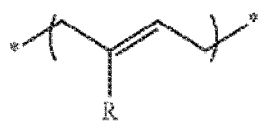
(3)

A content of a structural unit derived from the 1,3-diene compound in the branched conjugated diene copolymer included in the rubber composition relating to the present embodiment is preferably 5 mol% or more, more preferably 8 mol% or more, further preferably 10 mol% or more, particularly preferably 12 mol% or more, from the viewpoint of improving compatibility with another rubber component and co-crosslinkability with a member adjacent to a tire. Moreover, the content of the structural unit derived from the 1,3-diene compound is preferably 40 mol% or less, more preferably 30 mol% or less, further preferably 20 mol% or less, from the viewpoint of the effects of the present invention.

The branched conjugated diene copolymer included in the rubber composition relating to the present embodiment may comprise another monomer unit. Examples of another monomer unit include a butadiene unit, an aromatic vinyl unit, a non-conjugated olefin unit, and the like.

An aromatic vinyl unit refers to a structural unit derived from an aromatic vinyl compound in a copolymer. Here, an aromatic vinyl compound refers to an aromatic compound at least substituted with a vinyl group. Examples of the aromatic vinyl compound include, for example, styrene, $\alpha$-methylstyrene, 1-vinylnaphthalene, 3-vinyltoluene, ethylvinylbenzene, divinylbenzene, 4-cyclohexylstyrene, 2,4,6-trimethylstyrene, and the like, and styrene is preferable. They may be used alone, or two or more thereof may be used in combination.

A non-conjugated olefin unit refers to a structural unit derived from a non-conjugated olefin compound in a copolymer. Here, a non-conjugated olefin compound refers to a non-conjugated compound that is an unsaturated aliphatic hydrocarbon and that has one or more carbon-carbon double bonds. Examples of the non-conjugated olefin compound include, for example, $\alpha$-olefin such as propylene, 1-butene, 1-pentene, 1-hexene, 1-heptene, 1-octene, and the like; a heteroatom-substituted alkene compound such as vinyl pivalate, 1-phenylthioethene, N-vinylpyrrolidone, and the like,

etc., and 1-butene is preferable. They may be used alone, or two or more thereof may be used in combination.

As the branched conjugated diene copolymer included in the rubber composition relating to the present embodiment, a modified one treated with a modifying agent and into which a functional group having interaction with a filler is introduced can also be used, if desired. As such a functional group, any of those commonly used in this field can be appropriately used, examples of which include, for example, alkoxysilyl groups (for example, a trimethoxysilyl group, a triethoxysilyl group) and the like. For example, when the above-described copolymer is treated using chlorotriethoxysilane as a modifying agent before performing a hydrogenation process after synthesis of the above-described copolymer, a modified one into which a triethoxysilyl group is introduced at an active terminal of the copolymer can be obtained.

A glass transition temperature of the branched conjugated diene copolymer included in the rubber composition relating to the present embodiment is preferably -90°C or higher, more preferably -85°C or higher, further preferably -80°C or higher, further preferably -75°C or higher, particularly preferably -70°C or higher. Moreover, the glass transition temperature is preferably -10°C or lower, more preferably -15°C or lower, further preferably - 18°C or lower, further preferably -20°C or lower, particularly preferably -22°C or lower. Besides, the glass transition temperature of the copolymer is calculated by the above-described measuring method.

A weight-average molecular weight (Mw) of the branched conjugated diene copolymer included in the rubber composition relating to the present embodiment is preferably 100000 or more, more preferably 150000 or more, further preferably 200000 or more. Moreover, the weight-average molecular weight is preferably 2000000 or less, more preferably 1800000 or less, further preferably 1500000 or less, from the viewpoint of cross-linking uniformity. Besides, in the present specification, the weight-average molecular weight of the copolymer is measured by the above-described measuring method.

The Mw of the copolymer can be controlled by a conventional method, for example, by adjusting an amount of each monomer to be added during polymerization with respect to a catalyst. For example, the Mw can be increased by increasing an entire monomer/anionic polymerization catalyst ratio or an entire monomer/coordination polymerization catalyst ratio, and conversely, the Mw can be decreased by decreasing such a ratio.

The branched conjugated diene copolymer included in the rubber composition relating to the present embodiment can be produced by performing copolymerization reaction of respective monomer components, by a conventional method, for example, such as anionic polymerization, coordination polymerization, and the like, to form a copolymer. Furthermore, the copolymer can also be produced by hydrogenating such a copolymer to form a hydrogenated product. Hydrogenation reaction of a branched conjugated diene can be performed by a conventional method, and any of catalytic hydrogenation using a metal catalyst, a method using hydrazine, and the like can be appropriately used. For example, catalytic hydrogenation using a metal catalyst can be performed by adding hydrogen under an increased pressure in an organic solvent in presence of a metal catalyst. As the organic solvent, any of tetrahydrofuran, methanol, ethanol, and the like can be appropriately used. These organic solvents may be used alone, or two or more thereof may be used in combination. Moreover, as the metal catalyst, for example, any of palladium, platinum, rhodium, ruthenium, nickel, and the like can be appropriately used. These metal catalysts may be used alone, or two or more thereof may be used in combination. Pressure during pressurization is, for example, preferably 1 to 300 kg weight/$cm^2$.

Confirmation that the branched conjugated diene copolymer has an ethylene unit and a structural unit derived from 1,3-diene compound can be made by using a method such as a gel permeation chromatography (GPC), $^1$H-NMR, $^{13}$C-NMR, and the like. Moreover, presence of a unit derived from each monomer component can be confirmed based on $^1$H-NMR spectrum or $^{13}$C-NMR spectrum.

As long as copolymer reaction is one for realizing copolymerization of respective monomer components, an order of copolymerization is not particularly limited, and for example, random copolymerization may be performed on all monomers all at once. Alternatively, copolymerization may be performed by copolymerizing predetermined monomers in advance, and then adding the remaining monomers for copolymerization or by block copolymerization of those obtained by copolymerizing predetermined monomers in advance. Among them, random copolymerization is preferable. Also, a copolymerization method is not particularly limited, and as the copolymerization method, any of a solution polymerization method, an emulsion polymerization method, a gas-phase polymerization method, a bulk polymerization method, and the like can be used. Among them, a solution polymerization method is preferable. Moreover, a type of copolymerization may be any of a batch type and a continuous type.

The content Csw of the branched conjugated diene copolymer in the rubber component is preferably 10% by mass or more, more preferably 15% by mass or more, further preferably 20% by mass or more, further preferably 25% by mass or more, further preferably 30% by mass or more, further preferably 35% by mass or more, particularly preferably 40% by mass or more, from the viewpoint of the effects of the present invention. Moreover, Csw is preferably 80% by mass or less, more preferably 70% by mass or less, further preferably 65% by mass or less.

(BR)

The BR is not particularly limited, and those common in the tire industry can be used, such as, for example, a BR

having a cis content less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. These BRs may be used alone, or two or more thereof may be used in combination.

As the high cis BR, for example, those commercially available form Zeon Corporation, UBE Corporation, JSR Corporation, etc. can be used. When the rubber composition comprises a high cis BR, a low temperature property and abrasion resistance can be improved. A cis content of a high cis BR is preferably greater than 95 mol%, more preferably greater than 96 mol%, further preferably greater than 97 mol%. Besides, a cis content of a BR is measured by the above-described measuring method.

The rare-earth-based BR is synthesized using a rare-earth element-based catalyst and has a vinyl content of preferably less than 1.8 mol%, more preferably less than 1.6 mol%, further preferably 1.5 mol% or less, and a cis content of preferably greater than 95 mol%, more preferably greater than 96 mol%, further preferably 97 mol% or more. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such an SPB-containing BR, those commercially available from UBE Corporation, etc. can be used.

Examples of the modified BR include BRs modified with the same functional groups as described above for the SBR, and the like, and a modified butadiene rubber (modified BR) modified at its terminal and/or main chain with a functional group comprising at least one element selected from the group consisting of silicon, nitrogen, and oxygen can also be appropriately used.

Examples of other modified BRs include those obtained by adding a tin compound after polymerizing 1,3-butadiene by a lithium initiator, the terminal of the modified BR molecule being further bonded by tin-carbon bond (tin-modified BRs), and the like. Moreover, the modified BR may be either non-hydrogenated or hydrogenated.

A weight-average molecular weight (Mw) of a BR is preferably greater than 300000, more preferably greater than 350000, further preferably greater than 400000, from the viewpoint of abrasion resistance. Moreover, it is preferably less than 2000000, more preferably less than 1000000, further preferably less than 700000, from the viewpoints of cross-linking uniformity, etc. Besides, the Mw can be calculated by the above-described method.

A content of a BR in the rubber component is preferably 1.0% by mass or more, more preferably 5.0% by mass or more, further preferably 10% by mass or more, particularly preferably 20% by mass or more, from the viewpoint of the effects of the present invention. Moreover, the content of the BR in the rubber component is preferably 70% by mass or less, more preferably 65% by mass or less, further preferably 61% by mass or less.

(Other rubber components)

The rubber component may comprise a rubber component other than isoprene-based rubbers, branched conjugated diene copolymers as described above, and BRs as long as it does not affect the effects of the present invention. As the other rubber components, a rubber component commonly used in the tire industry can be used, examples of which include, for example, an SBR, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination. Moreover, besides the above-described rubber components, it may or may not comprise a known thermoplastic elastomer.

(SBR)

The SBR is not particularly limited, examples of which include a non-modified solution-polymerized SBR (S-SBR), a non-modified emulsion-polymerized SBR (E-SBR), modified SBRs (a modified S-SBR, a modified E-SBR) thereof, and the like. Examples of the modified SBR include an SBR modified at its terminal and/or main chain using a compound having a functional group described below (a modifying agent); a modified SBR coupled with tin, a silicon compound, etc. (a modified SBR of condensate or having a branched structure, etc.); and the like. Furthermore, hydrogenated ones of these SBRs (hydrogenated SBRs) and the like can also be used. These SBRs may be used alone, or two or more thereof may be used in combination.

A content of an SBR when compounded in 100 parts by mass of the rubber component is preferably 20% by mass or less, more preferably 15% by mass or less, further preferably 10% by mass or less.

(Rubber component synthesized from recycle-derived/biomass-derived raw material)

A monomer that is a structural unit of a synthetic rubber such as an IR, an SBR, a BR, and the like may be one derived from underground resources such as petroleum, a natural gas, and the like or one recycled from a rubber product

such as a tire and the like or a non-rubber product such as polystyrene and the like. Examples of monomers obtained by recycle (recycled monomers) include, but not particularly limited to, a recycle-derived polyisoprene, a recycle-derived butadiene, a recycle-derived aromatic vinyl compound, and the like. Examples of the above-described butadiene include 1,2-butadiene and 1,3 butadiene. Examples of the aromatic vinyl compound include, but not particularly limited to, styrene and the like. Among them, a recycle-derived polyisoprene (recycled isoprene), a recycle-derived butadiene (recycled butadiene), and/or a recycle-derived styrene (recycled styrene) are preferably used as raw materials.

A method of producing a recycled monomer is not particularly limited, examples of which include, for example, synthesis of a recycled monomer from recycle-derived naphtha obtained by decomposing a rubber product such as a tire and the like. Moreover, a method of producing a recycle-derived naphtha is not particularly limited and may be performed, for example, by extracting naphtha after decomposing a rubber product such as a tire and the like under high temperature and pressure, or decomposing it by microwaves, or mechanically pulverizing it.

Furthermore, a monomer that is a structural unit of a polymer such as an IR, an SBR, a BR, and the like may be one derived from biomass. In the present specification, "biomass" refers to a material derived from natural resources such as plants and the like. Examples of biomass include, but not particularly limited to, for example, agricultural, forest and fishery products and sugar, wood waste, a plant residue after acquisition of a useful component, a plant-derived ethanol, a biomass naphtha, and the like.

Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl compound include, but not particularly limited to, styrene and the like. Moreover, a method of producing a biomass monomer is not particularly limited, examples of which include, for example, a method by biological and/or chemical and/or physical conversion of an animal or a plant, and the like. A microbial fermentation is representative of biological conversion, and examples of chemical and/or physical conversion include a method using a catalyst, a method using a high heat, a method using a high pressure, a method using an electromagnetic wave, a method using a critical liquid, combinations thereof, and the like.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether or not a raw material of a polymer is derived from biomass can be determined from percent Modern Carbon (pMC) measured according to ASTM D6866-10. "pMC" means a ratio of $^{14}C$ concentration of a sample to $^{14}C$ concentration of a modern standard carbon (modern standard reference) and is a value used as an index that indicates a biomass ratio of a compound. A significance of this value will be mentioned below.

In 1 mole of carbon atoms ($6.02 \times 10^{23}$), there are about $6.02 \times 10^{11}$ $^{14}C$ that are about one trillionth of the number of normal carbon atoms. A half-life of $^{14}C$ is 5730 years, and $^{14}C$ regularly decreases. Therefore, in fossil fuels such as coal, petroleum, natural gas, and the like, where it is considered that 226,000 years or more have passed since carbon dioxide in the atmosphere was absorbed by plants to be fixed, all of $^{14}C$ elements, which were contained in them at the beginning of fixation, have decayed. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}C$ is constantly generated by cosmic rays causing nuclear reactions in the atmosphere. Therefore, decrease in $^{14}C$ due to radioactive decay and generation of $^{14}C$ due to nuclear reactions are balanced, and the amount of $^{14}C$ has been constant in the atmosphere environment of the earth. Therefore, the $^{14}C$ concentration of substances derived from biomass resources that have been circulating in the current environment becomes a value of about $1 \times 10^{-12}$ mol% based on the entire carbon atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$ ) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference that becomes a reference for the $^{14}C$ concentration. As a specific reference material, an oxalic acid standard provided by NIST (National Institute of Standard and Technology) is used. A specific radioactivity of carbon in this oxalic acid (radioactivity intensity of $^{14}C$ per gram of carbon) is sorted for each carbon isotope, $^{13}C$ is corrected to be a constant value, and a value corrected for attenuation correction from 1950 to the date of measurement is used as a standard $^{14}C$ concentration value (100%). A ratio of this value and a value actually measured for a sample becomes a pMC value.

Thus, if a rubber is produced from a material derived from 100% biomass, the $^{14}C$ concentration shows a value of approximately 110 pMC as, currently, under a normal condition, it is often not equal to 100, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value

corresponds to a biomass ratio of 0% as mentioned above.

From above, it is appropriate in terms of environmental protection to use a material such as a rubber having a high pMC value, that is, a material such as a rubber having a high biomass ratio, for a rubber composition.

[Filler]

The rubber composition relating to the present embodiment preferably comprises carbon black as a filler. The filler can be a filler consisting of carbon black.

<Carbon black>

Examples of carbon black include, but not particularly limited to, N134, N110, N220, N234, N219, N339, N330, N326, N351, N550, N762, and the like. A raw material of carbon black may be a biomass material such as lignin, vegetable oil, and the like or may be pyrolysis oil obtained by pyrolyzing a waste tire. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Chemical & Material Co., Ltd., Columbia Carbon Corporation., etc. can be used. The carbon black may be used alone, or two or more thereof may be used in combination.

Moreover, as carbon black other than the above-described carbon black, carbon black made from a biomass material such as lignin and the like, or a recovered carbon black obtained by pyrolyzing a product comprising carbon black such as a tire and the like followed by refining may be used from the viewpoints of a life cycle assessment, etc.

In the present specification, the term "recovered carbon black" refers to a carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight lost content due to the oxidative combustion of the recovered carbon black is 87% by mass or less. The recovered carbon black may also be expressed by rCB.

A recovered carbon black can be obtained from a pyrolysis process of a used pneumatic tire. For example, EP 3427975 A refers to "Rubber Chemistry and Technology", vol. 85, No. 3, pp.408-449 (2012), particularly, pages 438, 440, and 442 and describes that a recovered carbon black can be obtained by pyrolysis of an organic material at 550 to 800°C under an environment in which oxygen is eliminated or by vacuum pyrolysis at a relatively low temperature ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black relating to the present embodiment also include carbon black treated so as to include a functional group on its surface.

As the recovered carbon black, those commercially available from Strebl Green Carbon Pte Ltd., LD Carbon, etc. can be used.

A nitrogen adsorption specific surface area ($N_2SA$) of carbon black is preferably 80 $m^2/g$ or more, more preferably 90 $m^2/g$ or more, further preferably 100 $m^2/g$ or more, particularly preferably 110 $m^2/g$ or more, from the viewpoint of reinforcing property. Moreover, it is preferably 200 $m^2/g$ or less, more preferably 180 $m^2/g$ or less, further preferably 140 $m^2/g$ or less, from the viewpoints of heat generation and processability. Besides, the $N_2SA$ of the carbon black is measured by the above-described measuring method.

An average primary particle size of carbon black is preferably 50 nm or less, more preferably 40 nm or less, further preferably 30 nm or less, particularly preferably 25 nm or less, from the viewpoint of the effects of the present invention. Moreover, the average primary particle size is preferably 15 nm or more, more preferably 18 nm or more, further preferably 20 nm or more. Besides, the average primary particle size of the carbon black is measured by the above-described measuring method.

A content of carbon black based on 100 parts by mass of the rubber component is preferably greater than 10 parts by mass, more preferably greater than 20 parts by mass, further preferably greater than 30 parts by mass, further preferably greater than 40 parts by mass, particularly preferably 50 parts by mass or more. Moreover, the content is

preferably less than 100 parts by mass, more preferably less than 80 parts by mass, further preferably less than 70 parts by mass.

<Other fillers>

The filler may comprise another filler other than carbon black. The other filler is not particularly limited, and as the other filler, those conventionally and commonly used in the tire industry can be compounded, such as, for example, silica, aluminum hydroxide, calcium carbonate, alumina, clay, talc, and the like.

<Silica>

Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.

As silica recycled from a product comprising silica, silica recovered from such a product as an electronic component like a semiconductor, a tire, a desiccant, a filtering material like diatomaceous earth, or the like can be used. Moreover, a recovering method is not particularly limited, examples of which include pyrolysis, decomposition by electromagnetic waves, and the like. Among them, silica recovered from an electronic component such as a semiconductor and the like or from a tire is preferable.

As a crystallized silica is insoluble in water, silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.). As an amorphous silica extracted from rice husks, those commercially available from Wilmar, etc. can be used.

(Silane coupling agent)

Silica is preferably used in combination with a silane coupling agent. The silane coupling agent is not particularly limited, and any silane coupling agent conventionally used in combination with silica in the tire industry can be used, such as, for example, mercapto-based silane coupling agents described below; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. These silane coupling agents may be used alone, or two or more thereof may be used in combination.

[Other compounding agents]

Compounding agents conventionally and commonly used in the tire industry, such as, for example, a plasticizing agent, processing aid, a vulcanized rubber particle, wax, stearic acid, zinc oxide, an antioxidant, a vulcanizing agent, a vulcanization accelerator, and the like, can appropriately be compounded in the rubber composition relating to the present embodiment, in addition to the rubber component and the filler.

<Plasticizing agent>

The plasticizing agent is a material giving a rubber component plasticity and includes both a plasticizing agent

that is in a liquid state at 25°C and a plasticizing agent that is solid at 25°C. Examples of the plasticizing agent include oil, a resin component, a liquid rubber, an ester-based plasticizing agent, and the like. These plasticizing agents may be ones derived from mineral resources such as petroleum, natural gas, and the like, or ones derived from biomass. Moreover, low-molecular-weight hydrocarbon components obtained by pyrolyzing used tires or products containing various components and performing extraction from the pyrolysate may be used as plasticizing agents. The plasticizing agents may be used alone, or two or more thereof may be used in combination.

(Oil)

Examples of oil include, for example, mineral oils, vegetable oils, animal oils, and the like. Moreover, from the viewpoint of a life cycle assessment, one obtained by refining a waste oil after use for a rubber mixing machine or an engine or waste cooking oil used in a cooking facility may also be used. The oils may be used alone, or two or more thereof may be used in combination.

In the present specification, "mineral oil" refers to oil derived from mineral resources such as petroleum, natural gas, and the like. Examples of mineral oil include paraffinic oils (mineral oils), naphthenic oils, aromatic oils, and the like. Specific examples of the mineral oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, oils each having a low content of a polycyclic aromatic compound (PCA) can also be used. Examples of the oils each having a low content of a PCA include MES, TDAE, heavy naphthenic oil, and the like.

In the present specification, examples of the vegetable oils include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oils also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oils, a waste cooking oil obtained by recovering what was utilized as an edible oil, etc., and the like. Besides, the vegetable oil may be liquid or solid at 25°C.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at 25°C.

Whether the rubber composition comprises the above-described acylglycerol can be confirmed by, but not particularly limited to, $^1$H-NMR measurement. For example, a heavy chloroform in which a rubber composition containing triacylglycerol is immersed at 25°C for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm$0.10 ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

Examples of the animal oils include fish oils, beef tallow, oleyl alcohol derived therefrom, and the like.

A content of oil based on 100 parts by mass of the rubber component is preferably greater than 5 parts by mass, more preferably greater than 8 parts by mass, further preferably 10 parts by mass or more, from the viewpoint of

processability. Moreover, it is preferably less than 50 parts by mass, more preferably less than 30 parts by mass, further preferably less than 20 parts by mass, from the viewpoint of abrasion resistance. Besides, the content of the plasticizing agent also includes an amount of an extending plasticizing agent such as extending oil, extending resin, an extending liquid rubber component, an extending ester-based plasticizing agent, or the like which is used for extending a rubber component.

(Resin component)

The rubber composition preferably comprises a resin component among the above-described other compounding agents. The resin component is not particularly limited, and any resin commonly used in the tire industry can be used, examples of which include, for example, an aromatic vinyl-based resin, a dicyclopentadiene-based resin, a C9-based resin, a C5-based resin, a C5/C9-based resin, a terpene-based resin, a rosin-based resin, a phenol-based resin, and the like. Among them, the aromatic vinyl-based resin, the C9-based resin, and the terpene-based resin are preferable. The resin components may be used alone, or two or more thereof may be used in combination.

(Liquid rubber)

The liquid rubber is not particularly limited as long as it is a polymer in a liquid state at 25°C, examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. The liquid rubber may be used alone, or two or more thereof may be used in combination.

(Ester-based plasticizing agent)

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agents may be used alone, or two or more thereof may be used in combination.

(Wax)

The rubber composition relating to the present embodiment preferably comprises wax from the viewpoint of ozone resistance. Wax is not particularly limited, and any of those commonly used in the tire industry can be appropriately used, examples of which include, for example, a mineral-based wax, a plant-derived wax, and the like. The mineral-based wax refers to a wax derived from mineral resources such as oil, natural gas, and the like. The plant-derived wax refers to a wax derived from natural resources such as plants. Among them, the mineral-based wax is preferable. Examples of the plant-derived wax include, for example, a rice bran wax, a carnauba wax, a candelilla wax, and the like. Examples of the mineral-based wax include, for example, a paraffin wax, a microcrystalline wax, a specially selected wax thereof, and the like, and the paraffin wax is preferable. Besides, the wax relating to the present embodiment shall not include stearic acid. As wax, for example, those commercially available from Ouchi Shinko Chemical Industry Co., Nippon Seiro Co., Ltd., PARAMELT, etc. can be used. The wax may be used alone, or two or more thereof may be used in combination.

A content of wax based on 100 parts by mass of the rubber component is preferably 0.5 parts by mass or more, more preferably 0.8 parts by mass or more, further preferably 1.0 parts by mass or more, from the viewpoints of ozone resistance and weather resistance of a rubber. Moreover, it is preferably less than 10 parts by mass, more preferably less than 7.0 parts by mass, further preferably less than 5.0 parts by mass, from the viewpoint of prevention of whitening of a tire due to bloom.

(Vulcanized rubber particle)

The vulcanized rubber particle is a particle made of a vulcanized rubber. Specifically, a rubber powder specified in JIS K 6316:2017, and the like can be used. A recycled rubber powder produced from a pulverized product of a waste tire and the like is preferable from the viewpoints of consideration for environment and cost. The vulcanized rubber particle may be used alone, or two or more thereof may be used in combination.

The vulcanized rubber particle is not particularly limited and may be a non-modified vulcanized rubber particle or a modified vulcanized rubber particle.

As a commercially available product of a vulcanized rubber, for example, products manufactured by Lehigh

Technologies, Muraoka Rubber Reclaiming Co., Ltd. etc. can be used.

(Processing aid)

Examples of processing aid include, for example, a fatty acid metal salt, a fatty acid amide, an amide ester, a silica surfactant, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.
A content of processing aid when compounded based on 100 parts by mass of the rubber component is preferably greater than 0.5 parts by mass, more preferably greater than 1.0 parts by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

(Stearic acid)

A content of stearic acid when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of vulcanization rate.

(Zinc oxide)

A content of zinc oxide when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of abrasion resistance.

(Antioxidant)

Examples of the antioxidant include, but not particularly limited to, a naphthylamine-based antioxidant such as phenyl-α-naphthylamine and the like; a diphenylamine-based antioxidant such as octylated diphenylamine, 4,4'-bis(α,α'-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, styrenated phenol, and the like; bisphenol-based, trisphenol-based, or polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products manufactured by Seiko Chemical Co., Ltd., Sumitomo Chemical Co., Ouchi Shinko Chemical Industry Co., Flexsys, etc. can be used. The antioxidant may be used alone, or two or more thereof may be used in combination.
A content of an antioxidant when compounded based on 100 parts by mass of the rubber component is preferably greater than 0.8 parts by mass, more preferably greater than 1.0 parts by mass, further preferably greater than 1.5 parts by mass, from the viewpoint of ozone crack resistance of a rubber. Moreover, it is preferably less than 5.0 parts by mass, more preferably less than 4.0 parts by mass, further preferably less than 3.5 parts by mass, from the viewpoints of abrasion resistance and wet grip performance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used. The vulcanizing agent can be used alone, or two or more thereof can be used in combination.
A content of sulfur when compounded based on 100 parts by mass of the rubber component is preferably greater than 0.5 parts by mass, more preferably greater than 0.8 parts by mass, further preferably greater than 1.0 parts by mass, particularly preferably greater than 1.2 parts by mass, from the viewpoint of securing a sufficient vulcanization reaction.

Moreover, it is preferably less than 5.0 parts by mass, more preferably less than 4.0 parts by mass, further preferably less than 3.0 parts by mass, particularly preferably less than 2.0 parts by mass, from the viewpoint of prevention of deterioration. Besides, a content of a vulcanizing agent when an oil-containing sulfur is used as the vulcanizing agent is defined as a total content of pure sulfur contained in the oil-containing sulfur.

A known organic crosslinking agent can also be used as a vulcanizing agent other than sulfur. Although the organic crosslinking agent is not particularly limited as long as it can be form a crosslinking chain other than polysulfide bond, examples of the organic crosslinking agent include, for example, an alkylphenol-sulfur chloride condensate, sodium hexamethylene-1,6-bisthiosulfate dihydrate, 1,6-bis(N,N'-dibenzylthiocarbamoyldithio)hexane, dicumyl peroxide, and the like, and 1,6-bis(N,N'-dibenzylthiocarbamoyldithio)hexane is preferable. As these organic crosslinking agents, those commercially available from Taoka Chemical Co., Ltd., LANXESS, Flexsys, etc. can be used.

(Vulcanization accelerator)

Examples of the vulcanization accelerator include, but not particularly limited to, for example, a sulfenamide-based vulcanization accelerator, a thiazole-based vulcanization accelerator, a guanidine-based vulcanization accelerator, a thiuram-based vulcanization accelerator, a thiourea-based vulcanization accelerator, a dithiocarbamic acid salt-based vulcanization accelerator, an aldehyde-amine-based vulcanization accelerator, an aldehyde-ammonia-based vulcanization accelerator, an imidazoline-based vulcanization accelerator, a xanthate-based vulcanization accelerator, caprolactam disulfide, and the like. These vulcanization accelerators may be used alone, or two or more thereof may be used in combination. Among them, from the viewpoint that the desired effects can be more appropriately obtained, one or more vulcanization accelerators selected from the group consisting of a sulfenamide-based vulcanization accelerator, a thiazole-based vulcanization accelerator, and a guanidine-based vulcanization accelerator are preferable. The vulcanization accelerators may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like.

Examples of the thiazole-based vulcanization accelerator include, for example, 2-mercaptobenzothiazole (MBT) or salt thereof, di-2-benzothiazolyl disulfide (MBTS), 2-(2,4-dinitrophenyl)mercaptobenzothiazole, 2-(2,6-diethyl-4-morpholinothio)benzothiazole, and the like.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like.

Examples of the thiuram-based vulcanization accelerator include, for example, tetrakis(2-ethylhexyl) thiuram disulfide (TOT-N), tetramethylthiuram disulfide (TMTD), tetraethylthiuram disulfide, tetramethylthiuram monosulfide (TMTM), dipentamethylenethiuram disulfide, dipentamethylenethiuram tetrasulfide, and the like.

Examples of the thiourea-based vulcanization accelerator include, for example, a thiourea compound such as thiocarbamide, diethylthiourea, dibutylthiourea, trimethylthiourea, diorthotolylthiourea, and the like; N, N'-diphenylthiourea; trimethylthiourea; N,N'-diethylthioure; and the like.

Examples of the dithiocarbamic acid salt-based vulcanization accelerator include, for example, piperidinium pentamethylenedithiocarbamate (PPDC), zinc dimethyldithiocarbamate (ZnMDC), zinc diethyldithiocarbamate (ZnEDC), zinc dibutyldithiocarbamate (ZnBDC), zinc dibenzyldithiocarbamate (ZDBzC), zinc N-ethyl-N-phenyl dithiocarbamate (ZnEPDC), zinc N-pentamethylene dithiocarbamate (ZnPDC), sodium dibutyldithiocarbamate (NaBDC), copper dimethyldithiocarbamate (CuMDC), ferric dimethyldithiocarbamate (FeMDC), tellurium diethyldithiocarbamate (TeEDC), and the like.

A content of a vulcanization accelerator when compounded based on 100 parts by mass of the rubber component (a total amount of all of a plurality of vulcanization accelerators when used in combination) is preferably greater than 1.0 parts by mass, more preferably greater than 1.5 parts by mass, further preferably greater than 2.0 parts by mass. Moreover, the content of the vulcanization accelerator based on 100 parts by mass of the rubber component is preferably less than 8.0 parts by mass, more preferably less than 6.0 parts by mass, further preferably less than 5.0 parts by mass.

In the present specification, various materials each comprising a carbon atom (for example, a rubber, oil, resin, a vulcanization accelerator, an antioxidant, a surfactant, and the like) may be derived from carbon dioxide in the atmosphere. As a method of obtaining compounds of these various materials from carbon dioxide, carbon dioxide may be directly converted, or methane obtained through a methanation step for synthesizing methane from carbon dioxide may be converted.

[Production]

The rubber composition can be produced by a known method. For example, it can be produced by kneading the

respective above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary. In a case of the division of the base kneading step, a method of dividing the base kneading step may be: (1) a method of previously kneading a part of compounding agents and additives into a masterbatch and then adding the remaining compounding agents and additives to the obtained masterbatch to knead them; (2) a method of kneading all of compounding agents and additives to be kneaded in the base kneading step at once, and then remilling the kneaded product one or more times; or the like. In the above-described method (1), the number of masterbatches is not limited and may be two or more. Moreover, when the number of masterbatches is two or more, all of compounding agents and additives used in the base kneading step may be allocated to any of the masterbatches.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

A tire that comprises a sidewall composed of the rubber composition can be produced by a usual method. That is, the tire can be produced by extruding an unvulcanized rubber composition prepared by compounding the above-described components for a rubber component as appropriate into a shape of the sidewall, attaching the thus obtained sidewall together with other tire members on a tire forming machine and molding them to form an unvulcanized tire by a usual method, followed by heating and pressurizing the thus obtained unvulcanized tire in a vulcanizing machine. Examples of vulcanization conditions include, but not particularly limited to, for example, a method of vulcanizing at 150°C to 200°C for 10 to 30 minutes.

[Applications]

The tire of the present embodiment can be used for any application, regardless of whether the tire is a pneumatic tire or a non-pneumatic tire and can be used as a tire for a passenger car, a tire for a large passenger car, a tire for a large SUV, a racing tire, a motorcycle tire, a heavy-duty tire, or a run-flat tire. Besides, the "tire for a passenger car" refers to a tire that is presupposed to be mounted to a vehicle running with four wheels and that has a maximum load capacity of less than 1400 kg. The "heavy-duty tire" refers to a tire having a maximum load capacity of 1400 kg or more. Moreover, the tire of the present embodiment can be used as an all-season tire and a summer tire, as well as a winter tire such as a studless tire.

EXAMPLE

Hereinafter, examples considered to be preferable in implementing the present invention (Examples) will be described, though the scope of the present invention is not limited to only these Examples. Results, which are calculated based on evaluation methods described below considering tires obtained in accordance with Table 1 using various chemicals described below, are shown in Table 1.

<Various chemicals>

NR: TSR20
BR: Ubepol-BR360B manufactured by UBE Corporation (high cis BR, vinyl content: 1.9 mol%, cis content: 98 mol%, Mw: 570000)
Copolymer 1: Copolymer produced in Production example 1 described below (ethylene-farnesene copolymer, content of ethylene unit: 70 mol%)
Copolymer 2: Copolymer produced in Production example 2 described below (ethylene-myrcene copolymer, ethylene unit: 60 mol%)
Copolymer 3: Copolymer produced in Production example 3 described below (ethylene-farnesene copolymer, content of ethylene unit: 40 mol%)
Carbon black: DIABLACK I (N220) manufactured by Mitsubishi Chemical Corporation ($N_2SA$: 114 $m^2/g$, average primary particle size: 22 nm)
Oil: VivaTec 500 manufactured by H&R Group (TDAE oil)
Antioxidant 1: Antigen 6C manufactured by Sumitomo Chemical Co., Ltd. (6PPD, N-(1,3-dimethylbutyl)-N'-phenyl-p-phenylenediamine)
Antioxidant 2: Nocrac 224 manufactured by Ouchi Shinko Chemical Industry Co., Ltd. (TMQ, 2,2,4-trimethyl-1,2-dihydroquinoline polymer)
Wax: OZOACE 0355 manufactured by Nippon Seiro Co., Ltd. (paraffin wax)
Zinc oxide: Zinc oxide No. 1 manufactured by Mitsui Mining & Smelting Co., Ltd.
Stearic acid: Bead stearic acid "CAMELLIA" manufactured by NOF CORPORATION
Sulfur: Powdered sulfur manufactured by Tsurumi Chemical Industry Co., ltd.
Vulcanization accelerator: Nocceler CZ manufactured by Ouchi Shinko Chemical Industry Co., Ltd. (N-cyclohexyl-2-benzothiazolylsulfenamide (CBS))

Production example 1: production of copolymer 1

A cocatalyst, butyloctyl magnesium, and metallocene are added to a reactor containing methylcyclohexane and stirred to be alkylated. In this case, a concentration of the catalyst is adjusted to conform to a molecular weight, Tg, and the like of a copolymer 1 to be targeted. Next, ethylene and farnesene are continuously added at a mole ratio of 70:30 to perform a polymerization reaction. After cooling and degassing, the polymerization reaction is stopped by an addition of ethanol. An antioxidant is added to the polymer solution produced by the polymerization reaction, and the mixture is dried in an oven under vacuum, thereby obtaining a copolymer 1.

Production example 2: production of copolymer 2

Except that a mole ratio of ethylene to myrcene is 60:40, a copolymer 2 is obtained in the same manner as in Production example 1.

Production example 3: production of copolymer 3

Except that a mole ratio of ethylene to farnesene is 40:60, a copolymer 3 is obtained in the same manner as in Production example 1.

(Examples and Comparative examples)

According to the compounding formulations shown in Table 1, using a 1.7 L closed Banbury mixer, chemicals other than sulfur and a vulcanization accelerator are kneaded for 4 minutes until a temperature reaches a discharge temperature at 160°C to obtain a kneaded product. Next, using an open roll, the sulfur and vulcanization accelerator are added to the obtained kneaded product, and the mixture is kneaded for 4 minutes until the temperature reaches 105°C to obtain an unvulcanized rubber composition. The obtained unvulcanized rubber composition is molded into a shape of a sidewall, the sidewall is attached together with other tire members to prepare an unvulcanized tire, and the obtained unvulcanized tire is vulcanized at 170°C, thereby obtaining each test tire.

<Fuel efficiency index>

Rolling resistance of each test tire is measured using a rolling resistance tester when the test tire is made to run, and the reciprocal number of the rolling resistance is indicated as an index with a tire of Comparative example 1 being as 100. The results show that the higher the index is, the smaller the rolling resistance is and the more excellent the fuel efficiency is.

<Ozone resistance>

An ozone crack of a sidewall of each test tire is measured using an ozone drum tester when the test tire is made to run, and a value obtained by adding 0.1 to a total of cracks each having a length of 0.1 mm or more is calculated, the reciprocal number of the value being indicated as an index with a tire of Comparative example 1 being as 100. The results show that the higher the index is, the smaller the crack (split) is and the more excellent the ozone resistance is.
A sum of a fuel efficiency index and an ozone resistance index is indicated as an overall performance index.

Table 1

| | Example 1 | Example 2 | Example 3 | Example 4 | Example 5 | Comparative example 1 | Comparative example 2 | Comparative example 3 |
|---|---|---|---|---|---|---|---|---|
| Compounding amount (part by mass) | | | | | | | | |
| NR | 40 | 40 | 40 | 40 | 30 | 40 | 40 | 40 |
| BR | 30 | 30 | 20 | - | 20 | 30 | 30 | 30 |
| Copolymer 1 | 30 | 30 | 40 | 60 | - | - | 30 | - |
| Copolymer 2 | - | - | - | - | 50 | - | - | - |
| Copolymer 3 | - | - | - | - | - | 30 | - | 30 |
| Carbon black | 50 | 50 | 50 | 50 | 50 | 50 | 50 | 50 |
| Oil | 10 | 10 | 10 | 10 | 10 | 10 | 10 | 10 |
| Antioxidant 1 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 |
| Wax | 1.0 | 1.0 | 1.0 | 1.0 | 1.0 | 1.0 | 1.0 | 1.0 |
| Zinc oxide | 3.0 | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 | 2.0 |
| Sulfur | 2.0 | 2.0 | 2.0 | 2.0 | 2.0 | 2.0 | 2.0 | 2.0 |
| Vulcanization accelerator | 1.0 | 1.0 | 1.0 | 1.0 | 1.0 | 1.0 | 1.0 | 1.0 |
| Content M of ethylene unit (mol%) | 70 | 70 | 70 | 70 | 60 | 40 | 70 | 40 |
| Thickness T of surface rubber layer (mm) | 2.0 | 1.5 | 2.0 | 1.5 | 2.0 | 2.5 | 3.5 | 3.0 |
| Content Csw of branched conjugated diene copolymer (% by mass) | 30 | 30 | 40 | 60 | 50 | 30 | 30 | 30 |
| $M \times C_{SW} / T^3$ | 263 | 622 | 350 | 1244 | 375 | 77 | 49 | 44 |
| Evaluation | | | | | | | | |
| Fuel efficiency | 107 | 111 | 107 | 109 | 108 | 100 | 88 | 95 |
| Ozone resistance | 108 | 111 | 107 | 112 | 107 | 100 | 84 | 83 |
| Overall performance | 215 | 222 | 214 | 221 | 215 | 200 | 172 | 178 |

REFERENCE SIGNS LIST

| | |
|---|---|
| 1 | Tread part |
| 2 | Belt |
| 3 | Band |
| 21 | Bead core |
| 22 | Bead apex |
| 31 | Sidewall |
| 32 | Inner liner |
| 33 | Carcass |
| CL | Tire equator |
| T | Thickness of surface rubber layer at tire maximum width position |
| PW | Tire maximum width position |

**Claims**

**1.** A tire comprising a sidewall,

wherein the sidewall is composed of a rubber composition comprising a rubber component,
wherein the rubber component comprises an isoprene-based rubber and a branched conjugated diene copolymer,

wherein the branched conjugated diene copolymer comprises an ethylene unit and a structural unit derived from a 1,3-diene compound expressed by $CH_2 = CR - CH = CH_2$ (wherein, R represents a hydrocarbon group having 3 or more carbon atoms), and
wherein M is 50 or more, and $M \times C_{SW} / T^3$ is greater than 70,
where M represents a content, in mol%, of the ethylene unit in the branched conjugated diene copolymer, T represents a thickness, in mm, of a surface rubber layer at a tire maximum width position, and Csw represents a content, in % by mass, of the branched conjugated diene copolymer in the rubber component.

**2.** The tire of claim 1, wherein the 1,3-diene compound is farnesene and/or myrcene.

**3.** The tire of claim 1 or 2, wherein the rubber component further comprises a butadiene rubber.

**4.** The tire of any one of claims 1 to 3, wherein $M \times Csw / T^3$ is greater than 300.

**5.** The tire of any one of claims 1 to 4, wherein T is greater than 1.0 mm and less than 2.5 mm.

**6.** The tire of any one of claims 1 to 5,

wherein the rubber composition comprises carbon black, and
wherein $N_2SA$ of the carbon black included in the rubber composition is 100 $m^2/g$ or more and 140 $m^2/g$ or less.

**7.** The tire of any one of claims 1 to 6,

wherein the rubber composition comprises carbon black, and
wherein an average primary particle size of the carbon black included in the rubber composition is 15 nm or more and 25 nm or less.

**8.** The tire of any one of claims 1 to 7, wherein $M \times C_{SW} / T^3$ is greater than 300 and less than 1300.

**9.** The tire of any one of claims 1 to 8, wherein the content Csw of the branched conjugated diene copolymer in the rubber component is 20% by mass or more and 70% by mass or less.

**10.** The tire of any one of claims 1 to 9, wherein a content of the isoprene-based rubber in the rubber component is 20% by mass or more and 60% by mass or less.

FIG. 1

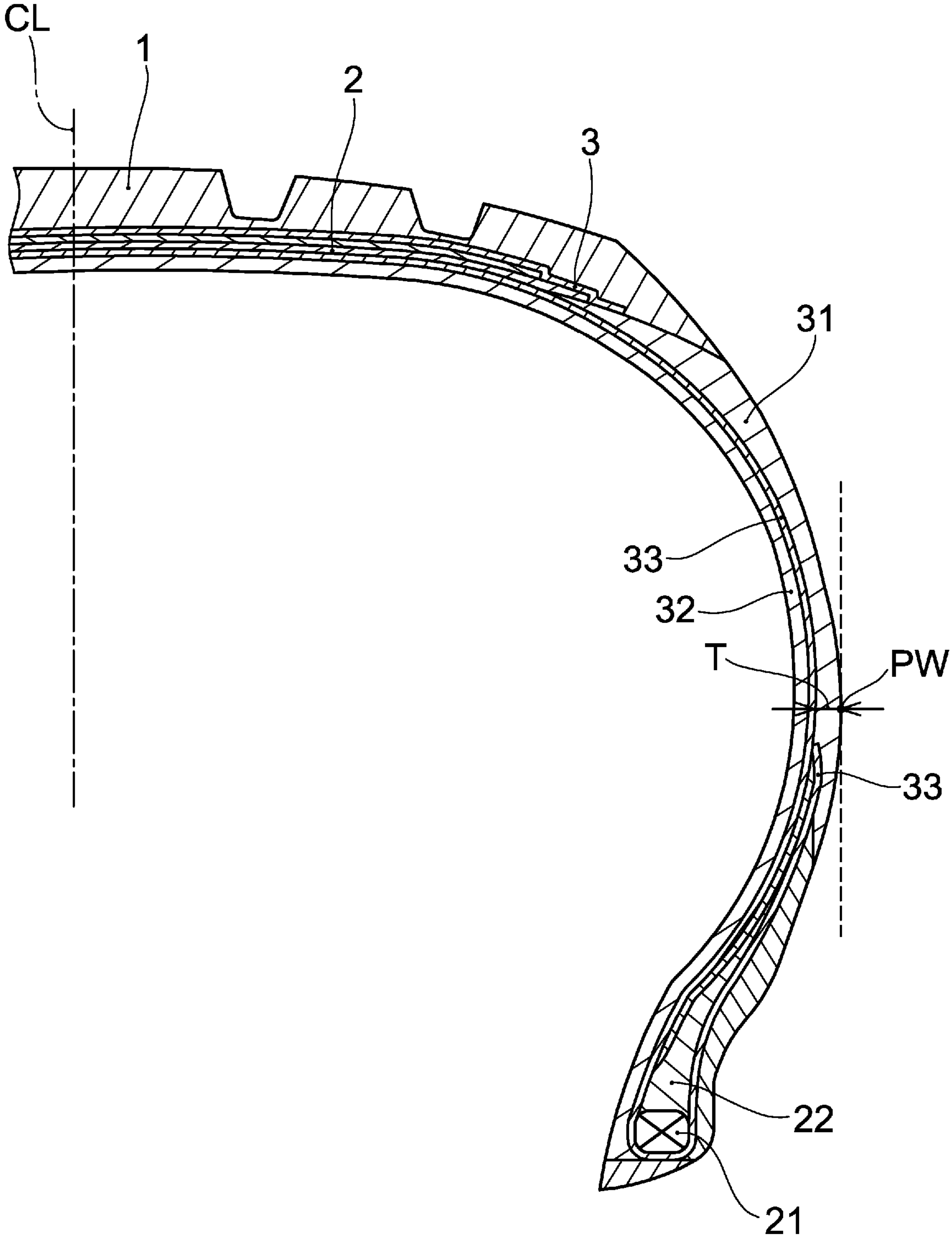

Europäisches Patentamt
European Patent Office
Office européen des brevets

# EUROPEAN SEARCH REPORT

Application Number
EP 25 16 9633

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 3 136 774 A1 (MICHELIN & CIE [FR]) 22 December 2023 (2023-12-22) * example C1; table 4 * ----- | 3,7,8 | INV. B60C1/00 C08L7/00 C08L47/00 |
| X | EP 4 076 942 B1 (MICHELIN & CIE [FR]) 6 December 2023 (2023-12-06) * example C1; table 5 * * paragraph [0020] * ----- | 1,2,4-6, 9,10 | |

TECHNICAL FIELDS SEARCHED (IPC)
B60C
C08L

The present search report has been drawn up for all claims

| Place of search | Date of completion of the search | Examiner |
|---|---|---|
| Munich | 21 August 2025 | Laïb, Samia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

3

EPO FORM 1503 03.82 (P04C01)

# ANNEX TO THE EUROPEAN SEARCH REPORT ON EUROPEAN PATENT APPLICATION NO. EP 25 16 9633

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2025

| Patent document cited in search report | Publication date | Patent family member(s) | Publication date |
|---|---|---|---|
| FR 3136774 A1 | 22-12-2023 | EP 4543692 A1 | 30-04-2025 |
| | | FR 3136774 A1 | 22-12-2023 |
| | | WO 2023247405 A1 | 28-12-2023 |
| EP 4076942 B1 | 06-12-2023 | CN 114845868 A | 02-08-2022 |
| | | EP 4076942 A1 | 26-10-2022 |
| | | FR 3104487 A1 | 18-06-2021 |
| | | US 2022379586 A1 | 01-12-2022 |
| | | WO 2021123569 A1 | 24-06-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014133844 A
- EP 3427975 A
- JP 6856781 B
- EP 3173251 A
- JP 2009002594 A


### Non-patent literature cited in the description


- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193
- *Akita Prefectural University Web Journal B*, 2019, vol. 6, 216-222